# EUROPÄISCHE PATENTANMELDUNG

(11) **EP 0 945 260 A2**
(43) Veröffentlichungstag der Anmeldung: **29.09.1999**
(21) Anmeldenummer: 99105343.0
(22) Anmeldetag: 16.03.1999
(51) Int. Cl.: B32B 27/36, B32B 27/18

(54) **Mindestens dreischichtige Polyesterfolie mit PEN-haltiger Deckschicht, Verfahren zu ihrer Herstellung und ihre Verwendung als APS-Folie (Advanced Photo System)**

(30) Priorität: 25.03.1998 DE 19813265
(71) Anmelder: Mitsubishi Polyester Film GmbH, 65203 Wiesbaden (DE)
(72) Erfinder: Peiffer, Herbert, Dr., 55126 Mainz (DE); Bennett, Cynthia, Dr., 55232 Alzey (DE); Hilkert, Gottfried, Dr., 55291 Saulheim (DE)
(74) Vertreter: Schweitzer, Klaus, Dr.

(57) **Zusammenfassung**

Offenbart ist eine transparente, biaxial orientierte Polyesterfolie mit einer Basisschicht, die zu mindestens 80 Gew.-% aus Polyethylenterephthalat besteht, und mindestens zwei Deckschichten, die dadurch gekennzeichnet ist, daß die Deckschichten aus einem Polymer oder einem Gemisch von Polymeren besteht, das mindestens 80 Gew.-% Ethylen-2,6-naphthalat-Einheiten enthält und bis zu 20 Gew.-% an Ethylen-terephthalat-Einheiten und/oder Einheiten aus cycloaliphatischen oder aromatischen Diolen und/oder Dicarbonsäuren enthält, wobei die Basisschicht bis zu 20 Gew.-% eines Kristallisationsverlangsamers enthält und/oder bis zu 20 Gew.-% eines Agens, welches die Kristallisationstemperatur über die von reinem PET erhöht. Die Folie eignet sich besonders für APS-Folien.

## Beschreibung

Die Erfindung betrifft eine biaxial orientierte Polyesterfolie mit einer Basisschicht, die zu mindestens 80 Gew.-% aus einem thermoplastischen Polyester besteht, und mindestens zwei Deckschichten. Die Erfindung betrifft weiterhin ein Verfahren zur Herstellung der Folie und ihre Verwendung als APS-Folie (APS = Advanced Photo System).

APS-Filme werden derzeit aus Polyethylen-2,6-naphthalat (PEN) gefertigt, weil dieses Polymer - im Gegensatz zu Polyethylen-terephthalat (PET) - eine höhere Steifigkeit besitzt und außerdem eine geringere "curl"-Neigung besitzt als PET. Diese Eigenschaften sind für APS-Folien deshalb von Bedeutung, weil der Film in der APS-Kamera automatisch eingefädelt wird. Eine Folie mit hoher "curl"-Neigung kann hier Fehlfunktionen hervorrufen. Die hohe Steifigkeit einer PEN-Folie erhöht die Betriebssicherheit, da sich steifere Folien leichter und sicherer einfädeln lassen. Polyethylennaphthalat hat jedoch den Nachteil, daß es gegenüber Polyethylenterephthalat teurer ist. Es bestand deshalb ein Bedürfnis nach einer preiswerteren APS-Folie, die jedoch nicht auf die mechanischen Vorteile der PEN-Folien verzichtet.

Gelöst wird die Aufgabe durch eine biaxial orientierte Polyesterfolie mit einer Basisschicht, die zu mindestens 80 Gew.-% aus Polyethylenterephthalat besteht und mindestens zwei Deckschichten, wobei die Folie dadurch gekennzeichnet ist, daß die Deckschichten aus einem Polymer oder einem Gemisch von Polymeren besteht/bestehen, das mindestens 80 Gew.-% an Ethylen-2,6-naphthalat-Einheiten und bis zu 20 Gew.-% an Ethylen-terephthalat-Einheiten und/oder bis zu 20 % Einheiten aus cycloaliphatischen oder aromatischen Diolen und/oder Dicarbonsäuren enthält, mit der Maßgabe, daß die Basisschicht bis zu 20 Gew.-% eines Kristallisationsverlangsamers enthält und/oder bis zu 20 Gew.-% eines Agens, welches die Kristallisationstemperatur über die von reinem PET erhöht. Eine solche Folie läßt sich leicht herstellen und verarbeiten und zeigt nicht mehr den für PET-Folien typischen Curl.

Bevorzugt ist eine Polyesterfolie, in der die Polymere der Deckschicht mindestens 85 Gew.-% an Ethylen-2,6-naphthalat-Einheiten und bis zu 15 Gew.-% an Ethylen-terephthalat-Einheiten enthalten. Davon ist wiederum eine solche Polyesterfolie besonders bevorzugt, in der die Polymere der Deckschicht mindestens 90 Gew.-% an Ethylen-2,6-naphthalat-Einheiten und bis zu 10 Gew.-% an Ethylen-terephthalat-Einheiten enthalten. Die Deckschicht kann jedoch auch vollständig aus Ethylen-2,6-naphthalat-Polymeren bestehen.

Geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ring. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉)Alkandisäuren besonders geeignet, wobei der Alkanteil geradkettig oder verzweigt sein kann.

Geeignete Kristallisationsverlangsamer und Agentien, welche die Kristallisationstemperatur über die vom PET erhöhen, sind Polyester aufgebaut aus Diolen und dicarbonsäureabgeleiteten Einheiten, welche zum einen sperrig sind und locker zum anderen gewinkelte Strukturen ergeben. Als Beispiele für Diolkomponenten seien genannt Glykol, Cycloaliphatische Diole wie Cyclohexandiole insbesondere Cyclohexan-1,4-diol, aromatische Diole der Formel HO-C₆H₄-X-C₆H₄-OH, wobei X für -CH₂-, -C(CH₃)₂-, -C(CF₃)₂-, -O-, -S- oder -SO₂- steht. Als Beispiele für Dicarbonsäuren seien genannt: Naphthalindicarbonsäure, bspw. Naphthalin-1,4- oder 1,6- oder 2,6-dicarbonsäure, Isophthalsäure, cycloaliphatische Dicarbonsäuren wie Cyclohexandicarbonsäuren, insbesondere Cyclohexan-1,4-dicarbonsäuren. Als besonders vorteilhafte Kristallisationsverlangsamer haben sich Polyethylen-2,6-naphthalat und Polyethylenisophthalat erwiesen; ein bevorzugter Agens zur Erhöhung der Kristallisationstemperatur ist Polyethylen-2,6-naphthalat.

Gegenstand der vorliegenden Erfindung ist auch ein Verfahren zur Herstellung dieser Folie. Es umfaßt das
a) Herstellen einer Folie aus Basis- und Deckschichten durch Coextrusion,
b) biaxiale Verstrecken der Folie und
c) Thermofixieren der verstreckten Folie.

Zur Herstellung der Deckschicht werden zweckmäßig Granulate aus Polyethylenterephthalat und Polyethylen-2,6-naphthalat im gewünschten Mischungsverhältnis direkt dem Extruder zugeführt. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich Copolymere aus den Homopolymeren bilden.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs. und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Von großem Vorteil bei diesem Verfahren ist, daß dem Extruder Granulate zugegeben werden können, die die Maschine nicht verkleben.

Die Basisschicht der Folie besteht bevorzugt zu mindestens 90 Gew.-% aus Polyethylenterephthalat (PET). Besonders bevorzugt sind Polyester, die zu mindestens 90 mol-%, bevorzugt mindestens 95 mol-% and PET bestehen. Die restlichen Monomereinheiten stammen aus anderen Diolen bzw. Dicarbonsäuren. Geeignete Diol-Comonomere sind beispielsweise Ethylenglykol oder aromatische Diole der allgemeinen Formel HO-C₆H₄-X-C₆H₄-OH, wobei X für -CH₂-, -C(CH₃)₂-, -C(CF₃)₂-, -O-, -S- oder -SO₂-.

Die Dicarbonsäure-Comonomereinheiten leiten sich bevorzugt ab von Naphthalindicarbonsäuren, Isophthalsäure oder Cyclohexandicarbonsäuren (insbesondere Cyclohexan-1,4-dicarbonsäure).

Insbesondere handelt es sich bei den restlichen Einheiten um Polyethylen-2,6-naphthalat und Polyethylenisophthalat.

Die Herstellung der Polyester kann nach dem Umesterungsverfahren erfolgen. Dabei geht man von Dicarbonsäureestern und Diolen aus, die mit den üblichen Umesterungskatalysatoren, wie Zink-, Calcium-, Lithium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Für die Verarbeitung der Polymere hat es sich als günstig erwiesen, die Polymere für die Basisschicht und die Deckschicht so zu wählen, daß sich die Viskositäten der jeweiligen Polymerschmelzen nicht zu sehr unterscheiden. Im anderen Fall ist mit Fließstörungen oder Streifenbildung auf der fertigen Folie zu rechnen. Für die Beschreibung der Viskositätsbereiche der beiden Schmelzen wird eine modifizierte Lösungsmittelviskosität (SV-Wert oder solution viscosity) verwendet. Die Lösungsmittelviskosität ist ein Maß für das Molekulargewicht des jeweiligen Polymers und korreliert mit der Schmelzviskosität. Je nach chemischer Zusammensetzung des verwendeten Polymers ergeben sich andere Korrelationen. Für handelsübliche Polyethylenterephthalate, die sich zur Herstellung von biaxial orientierten Folien eignen, liegen die SV-Werte im Bereich von 600 bis 1000. Um eine einwandfreie Qualität der Folie zu gewährleisten, sollte der SV-Wert der Copolymere für die Deckschicht im Bereich von 300 bis 900 liegen, vorzugsweise zwischen 400 und 800, insbesondere zwischen 500 und 700. Falls erwünscht, kann an den jeweiligen Granulaten eine Festphasenkondensation durchgeführt werden, um die benötigten Schmelzviskositäten der Materialien einzustellen. Allgemein gilt, daß sich die Schmelzviskositäten der Polymerschmelzen für Basis- und Deckschicht(en) um nicht mehr als den Faktor 5, vorzugsweise nicht mehr als den Faktor 2 bis 3, unterscheiden sollten.

Die Polymere für die beiden Deckschichten können auf 3 verschiedene Weisen hergestellt werden:
a) Bei der gemeinsamen Polykondensation werden Terephthalsäure und Naphthalin-2,6-dicarbonsäure gemeinsam mit Ethylenglykol in einem Reaktionskessel vorgelegt und unter Verwendung der üblichen Katalysatoren und Stabilisatoren zu einem Polyester polykondensiert. Die Terephthalat- und Naphthalat-Einheiten sind dann in dem Polyester statistisch verteilt.
b) Polyethylenterephthalat (PET) und Polyethylen-2,6-naphthalat (PEN) werden im gewünschten Verhältnis gemeinsam aufgeschmolzen und gemischt. Dies kann entweder in einem Reaktionskessel oder vorzugsweise in einem Schmelzkneter (Zweischneckenkneter) oder einem Extruder erfolgen. Sofort nach dem Aufschmelzen beginnen Umesterungsreaktionen zwischen den Polyestern. Zunächst erhält man Blockcopolymere, aber mit zunehmender Reaktionszeit - abhängig von der Temperatur und Mischwirkung des Rührelements - werden die Blöcke kleiner, und bei langer Reaktionszeit erhält man ein statistisches Copolymer. Allerdings ist es nicht nötig und auch nicht unbedingt vorteilhaft zu warten, bis eine statistische Verteilung erreicht ist, denn die gewünschten Eigenschaften werden auch mit einem Blockcopolymer erhalten. Anschließend wird das erhaltene Copolymer aus einer Düse herausgepreßt und granuliert.
c) PET und PEN werden als Granulat im gewünschten Verhältnis gemischt und die Mischung dem Extruder für die Deckschicht zugeführt. Hier findet die Umesterung zum Copolymer direkt während der Herstellung der Folie statt. Dieses Verfahren hat den Vorteil, daß es sehr wirtschaftlich ist. In der Regel werden mit diesem Verfahren Blockcopolymere erhalten, wobei die Blocklänge von der Extrusionstemperatur, der Mischwirkung des Extruders und der Verweilzeit in der Schmelze abhängt.

In einer bevorzugten Ausführungsform der Erfindung sind 0,1 bis 20 Gew.-% der Polymere der Basisschicht identisch mit denen einer Deckschicht. Diese werden der Basisschicht entweder direkt bei der Extrusion beigemischt oder sind automatisch in der Folie durch Regeneratzugabe enthalten. Der Anteil dieser Copolymere in der Basisschicht ist so gewählt, daß die Basisschicht kristallinen Charakter aufweist.

Die Basisschicht und die Deckschichten können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 5 Gew.-% erwiesen. Eine detaillierte Beschreibung der Antiblockmittel findet sich beispielsweise in der EP-A 0 602 964.

Zur Einstellung weiterer gewünschter Eigenschaften kann die Folie corona- bzw. flammvorbehandelt und/oder beschichtet sein. Typische Beschichtungen sind haftvermittelnde, antistatisch, schlupfverbessernd oder dehäsiv wirkende Schichten. Es bietet sich an, diese zusätzlichen Schichten über in-line coating mittels wäßriger Dispersionen vor der Querverstreckung auf die Folie aufzubringen.

Die erfindungsgemäße Polyesterfolie enthält zwei Deckschichten. Aufbau, Dicke und Zusammensetzung der jeweiligen Deckschicht können unabhängig voneinander gewählt werden, bevorzugt sind sie jedoch nahezu identisch.

Zwischen der Basisschicht und den Deckschichten kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschichten ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können. Bevorzugt sind sie gleich dick. Im allgemeinen sollte die Dicke jeder Deckschicht mindestens 10 bis 30 % der Gesamtfoliendicke ausmachen.

Die Gesamtdicke der erfindungsgemäßen Polyesterfolie beträgt vorzugsweise 5 bis 200, insbesondere 10 bis 150 µm, vorzugsweise 15 bis 100 µm.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend als APS-Folie.

## Patentansprüche

1. Transparente, biaxial orientierte Polyesterfolie mit einer Basisschicht, die zu mindestens 80 Gew.-% aus Polyethylenterephthalat besteht, und mindestens zwei Deckschichten, dadurch gekennzeichnet, daß die Deckschichten aus einem Polymer oder einem Gemisch von Polymeren besteht, das mindestens 80 Gew.-% Ethylen-2,6-naphthalat-Einheiten enthält und bis zu 20 Gew.-% an Ethylen-terephthalat-Einheiten und ggf. bis zu 20 Gew.-% an Einheiten aus cycloaliphatischen oder aromatischen Diolen und/oder Dicarbonsäuren enthält, mit der Maßgabe, daß die Basisschicht bis zu 20 Gew.-% eines Kristallisationsverlangsamers enthält und/oder bis zu 20 Gew.-% eines Agens, welches die Kristallisationstemperatur über die von reinem PET erhöht.

2. Folie gemäß Anspruch 1, dadurch gekennzeichnet, daß die Deckschicht mindestens 85 Gew.-%, bevorzugt mindestens 90 Gew.-%, an Ethylen-2,6-naphthalat-Einheiten enthält.

3. Folie gemäß Anspruch 1 oder 2, dadurch gekennzeichnet, daß der Kristallisationsverlangsamer Polyethylen-2,6-naphthalat oder Polyethylenisophthalat ist.

4. Folie gemäß einem oder mehreren der Ansprüche 1 bis 3, dadurch gekennzeichnet, daß die Deckschicht eine Dicke von 0,2 bis 6 µm, vorzugsweise von 0,3 bis 5,5 µm, besonders bevorzugt von 0,3 bis 5,0 µm, aufweist.

5. Folie gemäß einem oder mehreren der Ansprüche 1 bis 4, dadurch gekennzeichnet, daß das Agens, welches die Kristallisationstemperatur erhöht, Polyethylen-2,6-naphthalat ist.

6. Folie gemäß einem oder mehreren der Ansprüche 1 bis 4, dadurch gekennzeichnet, daß sie dreischichtig ist und aus der Basisschicht und je einer Deckschicht auf beiden Seiten der Basisschicht besteht.

7. Folie gemäß einem oder mehreren der Ansprüche 1 bis 6, dadurch gekennzeichnet, daß mindestens eine der Deckschichten pigmentiert ist.

8. Folie gemäß einem oder mehreren der Ansprüche 1 bis 7, dadurch gekennzeichnet, daß sie auf mindestens einer Seite mit einer Corona behandelt ist.

9. Folie gemäß einem oder mehreren der Ansprüche 1 bis 8, dadurch gekennzeichnet, daß sie auf mindestens einer Seite in-line beschichtet ist.

10. Verfahren zur Herstellung der Folie nach einem oder mehreren der Ansprüche 1 bis 9, umfassend die Schritte
a) Herstellen einer Folie aus Basis- und Deckschichten durch Coextrusion,
b) biaxiales Verstrecken der Folie und
c) Thermofixieren der verstreckten Folie.

11. Verwendung der Folie nach einem oder mehreren der Ansprüche 1 bis 9 als APS-Folie.
